# EUROPÄISCHE PATENTSCHRIFT

(11) **EP 1 572 599 B1**
(45) Veröffentlichungstag und Bekanntmachung des Hinweises auf die Patenterteilung: **15.02.2017**
(21) Anmeldenummer: 03813574.5
(22) Anmeldetag: 17.12.2003
(51) Int. Cl.: C04B 35/634, C04B 37/00, C04B 37/02

(54) **TEMPERATURSTABILE UND FLÜSSIGKEITSDICHTE VERBINDUNG EINES ERSTEN BAUTEILS AUS METALL MIT EINEM ZWEITEN BAUTEIL AUS KERAMIK UND VERWENDUNG EINER SOLCHEN VERBINDUNG**
THERMALLY STABLE AND LIQUID-TIGHT JOINT BETWEEN A FIRST METAL AND A SECOND CERAMIC, AND THE USE OF ONE SUCH JOINT
LIAISON, STABLE AUX TEMPERATURES ET ETANCHE AUX LIQUIDES, D'UN PREMIER COMPOSANT EN METAL AVEC UN DEUXIEME COMPOSANT EN CERAMIQUE ET UTILISATION D'UNE TELLE LIAISON

(30) Priorität: 19.12.2002 DE 10259746
(43) Veröffentlichungstag der Anmeldung: 14.09.2005
(73) Patentinhaber: Testo AG, 79853 Lenzkirch (DE)
(72) Erfinder: MUHL, Mike, 79106 Freiburg (DE); DERR, Andreas, 78166 Donaueschingen (DE); HECKELMANN, Gerd, 79853 Lenzkirch (DE); OSSWALD, Heinz, 79848 Bonndorf (DE); HALL, Jürgen, 79877 Friedenweiler-Rötenbach (DE)
(74) Vertreter: Maucher Jenkins Patent- und Rechtsanwälte
(86) Internationale Anmeldenummer: PCT/EP2003/014425
(87) Internationale Veröffentlichungsnummer: WO 2004/056719

(56) Entgegenhaltungen:
- DE-B- 1 269 024

## Beschreibung

Die Erfindung betrifft eine temperaturstabile und flüssigkeitsdichte Verbindung eines ersten Bauteils mit einem zweiten Bauteil. Solche Verbindungen finden sich beispielsweise in Mess- oder Überwachungseinrichtungen, die in direkten Kontakt mit einem zu messenden oder zu überprüfenden Medium gebracht werden. Diese Einrichtungen erfordern häufig Verbindungen zwischen beispielsweise keramischen Bauteilen, wie etwa Sensoren oder Schaltungsträgern, und weiteren, beispielsweise metallischen Konstruktionselementen, wie etwa Halterungen.

Bei plötzlichen Temperaturwechseln ("Temperaturschocks") - z.B. beim Eintauchen der Mess- oder Überwachungseinrichtung in das Messmedium - sind diese Verbindungen infolge der unterschiedlichen Temperaturkoeffizienten und des darin begründeten unterschiedlichen Ausdehnungsverhaltens der beteiligten (keramischen und metallischen) Werkstoffe häufig extremen mechanischen Belastungen ausgesetzt. Dies kann z.B. zu Rissbildungen in den Verbindungen führen.

An die Verbindungen werden deshalb in der Praxis hohe Anforderungen hinsichtlich Zuverlässigkeit, Haltbarkeit, Langzeitstabilität und Dichtigkeit gestellt. Insbesondere die langzeitstabile Dichtigkeit ist von erheblicher Bedeutung, weil unerwünscht durch Undichtigkeiten (Rissbildungen) von außen eindringende Gase, Flüssigkeiten oder Fremdkörper zu einer Beeinträchtigung oder gar Zerstörung der (Mess-)Einrichtung führen können.

Grundsätzlich sind hochwertige Verbindungen zwischen keramischen und metallischen Bauteilen bekannt. So beschreibt die US-2002/0139563 A1 eine Verbindung eines metallischen Anschlusses mit einem Keramiksubstrat durch Verwendung einer aufgeschmolzenen Zwischenlage aus Indium-haltiger Folie. Die Herstellung dieser Verbindung ist prozesstechnisch sehr aufwändig.

Die DE 12 69 024 beschreibt eine verdrehfeste Metall-Keramik-Verbindung, bei der auf eine Klebeschicht eine Schutzschicht z.B. aus Silikongummi aufgebracht wird, wobei nach Aufbringen der Klebeschicht das Metallteil unter Anwendung eines Hochgeschwindigkeits-Umformverfahrens, insbesondere des Magneform-Verfahrens, auf den Keramikkörper aufgeschossen und dann die Klebeschicht ausgehärtet wird.

Die DE 43 03 581 A1 beschreibt eine elektrisch isolierende gasdichte Durchführung mindestens eines elektronischen Leiters durch einen metallischen Mantel eines Abgasssystems eines Verbrennungsmotors. Die Durchführung ist von zwei am Mantel angeformten Lappen gebildet; Zwischen diesen sind in Durchführungsrichtung zwei aufeinanderfolgende Abschnitte vorgesehen. In den ersten, abgassystemnahen Abschnitt sind die durchgeführten metallischen Leiter durch ein keramisches Material, vorzugsweise Ton, elektrisch von dem metallischen Lappen isoliert. Im anschließenden zweiten Abschnitt ist als elektrisches Isolier- und Dichtmaterial zwischen den Leitern und den Lappen ein dauerelastisch-plastisches Material eingesetzt. Die DE 43 03 581 A1 widmet sich also dem Problem der gasdichten, elektrisch isolierenden Durchführung eines oder mehrerer elektrischer (metallischer) Leiter durch eine von metallischen Lappen gebildete Durchführung eines Abgasssystems.

Der vorliegenden Erfindung liegt demgegenüber die Aufgabe zugrunde, eine kostengünstig und fertigungstechnisch einfach herstellbare temperaturstabile und flüssigkeitsfeste Verbindung zwischen einem ersten metallischen und einem zweiten keramischen Bauteil zu schaffen, die einem äußeren Medium aussetzbar ist und die dabei auch schnellen und häufigen Temperaturwechseln ("Temperaturschocks") zuverlässig standhält.

Diese Aufgabe wird erfingdungsgemäß gelöst durch die Merkmale von Anspruch 1. Somit wird eine Verbindung mit einer ersten Klebstoffverbindung zwischen dem ersten und dem zweiten Bauteil und mit einer zweiten Klebestoffverbindung, deren Klebstoff eine höhere Elastizität als der Klebstoff der ersten Klebstoffverbindung aufweist und die so angeordnet ist, dass ein unmittelbarer Kontakt der ersten Klebstoffverbindung mit dem äußeren Medium verhindert wird, vorgeschlagen.

Als Klebstoffe für die ersten Klebstoffverbindung sind nicht-elastische Klebstoffe insbesondere Keramik- und Epoxidhartkleber geeignet wie zum Beispiel: EP21AOHT, EP21CHT-1, EP21TDCHT-1, EP34CA, EP35, EP39MHT, EP42HT, EP121CL, ... (Fa. Master-Bond) ; 7030, 903HP, 989, Durapot 801, Respond S5H13, Duralco 4460, Duralco 4525, Duralco 4525 EHV, Duralco 4535, ... (Fa. Cotronics); EP 5430 (Fa. Rhenatech); DER 354 (Fa. Dow Corning).

Als Klebestoffe für die zweite Klebestoffverbindung sind geeignet elastische Kleber, die günstiger weise lebensmittelverträglich sind, insbesondere Silikonverbindungen (Harze und Kleber) wie z.B.:

### Lebensmittelverträgliche Klebestoffe:

RTV 102, 103, 106, 108, 109, 112, 116, 118, 159, 19.01, IS 800, 802, 803, 806, 808, SCS 1001 - 1003, 1009.1097, 1297 (Fa. General Electric); Loctite Superflex (Fa. Loctite).

Andere Klebstoffe:
VT 3601 E, VU 4691, VU4694 E, VU 4670 (Fa. Peters); Scrintec 901 (Fa. Roth); 5366, 5367, 5368, 5375, 5398, 5399 (Fa. Loctite)

Ein erster wesentlicher Aspekt der vorliegenden Erfindung besteht darin, einen Einsatz getrennt optimierter bzw. in ihrer Auswahl optimierbarer Klebstoffe vorzusehen. Der für die erste Klebstoffverbindung gewählte Klebstoff ist dabei hinsichtlich der Festigkeit der mechanischen Verbindung (Fixierung) zwischen dem ersten und dem zweiten Bauteil optimiert auszuwählen. Das bedeutet, dass ein relativ harter, weniger elastischer, fester Klebstoff mit sehr guten mechanischen Festigkeitseigenschaften zu wählen ist.

Dagegen ist als Klebstoff für die zweite Klebstoffverbindung ein Klebstoff vorzusehen, der sich - ggf. unter Inkaufnahme geringerer Festigkeit und Härte - durch eine hohe Elastizität auszeichnet.

Ein weiterer wesentlicher Aspekt der Erfindung besteht dadurch darin, dass der feste, die mechanische Festigkeit der Verbindung sichernde Klebstoff durch den Klebstoff der zweiten Klebstoffverbindung gegenüber äußeren Einflüssen, insbesondere z.B. eines zu messenden Mediums, zuverlässig geschützt werden kann. Dabei ist letzterer vorteilhafterweise auch hinsichtlich seiner Widerstandsfähigkeit gegenüber äußeren (z.B. aggressiven) Medien optimiert.

Mit der vorliegenden Erfindung ist es also möglich, die jeweils vorteilhaften Eigenschaften zweier verschiedener Klebstoffe zu nutzen und dadurch zu einer insgesamt optimierten Verbindung zwischen zwei Werkstoffen mit sehr unterschiedlichen Temperaturkoeffizienten und damit unterschiedlichem Ausdehnungsverhalten zu gelangen.

Für eine konstruktiv und fertigungstechnisch vorteilhafte Ausgestaltung der erfindungsgemäßen Verbindung weist das erste metallische Bauteil eine Durchgangsöffnung auf, in der das zweite keramische Bauteil durch die erste Klebstoffverbindung fixiert ist.

Das erste metallische Bauteil ist als Aufnahmehülse mit einer zentralen Durchgangsöffnung ausgestaltet und bildet vorzugsweise mit der Hülsenmantelfläche und einer schichtförmig ausgebildeten zweiten Klebstoffverbindung eine äußere Kontaktseite zur Umgebung, z.B. zu einem zu messenden Medium.

In diesem Zusammenhang weist die zweite Klebstoffverbindung bevorzugt eine zum Kontakt mit dem äußeren Medium vorgesehene Kontaktseite und eine der Kontaktseite abgewandte innere Seite auf, die der ersten Klebstoffverbindung abschirmend zugewandt ist.

Konstruktiv ist dabei eine Ausgestaltung der Erfindung bevorzugt, bei der zumindest ein Bereich der inneren Seite der zweiten Klebstoffverbindung in direktem Kontakt mit der ersten Klebstoffverbindung ist.

Eine bevorzugte Verwendung einer erfindungsgemäßen Verbindung ist in einer Sensorbaugruppe eines Messgeräts möglich, die in ein zu untersuchendes Medium einbringbar ist.

Die Erfindung wird nachfolgend anhand einer Zeichnung beispielhaft weiter erläutert; es zeigen:
- Figur 1:: schematisch eine erfindungsgemäße Verbindung,
- Figur 2:: eine Ansicht eines Messgeräts, in dem die erfindungsgemäße Verbindung Verwendung findet,
- Figur 3:: eine Sensorbaugruppe des Gerätes nach Figur 2 und
- Figur 4:: einen Längsschnitt durch einen Teil des Geräts nach Figur 2.

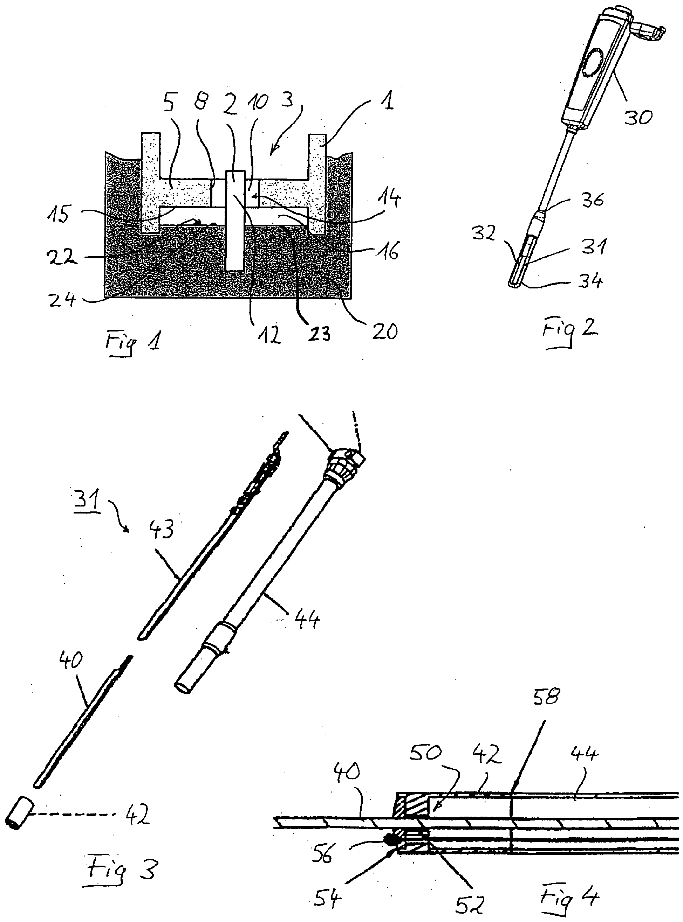

Figur 1 zeigt schematisch eine erfindungsgemäße Verbindung zwischen einem metallischen Bauteil 1 und einem keramischen Bauteil 2. Das metallische Bauteil ist hülsenförmig mit einer Durchgangsbohrung 3 und einer darin querverlaufenden Zwischenplatte 5 ausgebildet. In der Zwischenplatte 5 ist eine Bohrung 8 zum Durchtritt des keramischen Bauteils 2 vorgesehen. Der Bereich der Bohrung 8 ist mit Klebstoff 10 einer ersten Art und Güte unter festem Einschluss eines Abschnitts 12 des keramischen Bauteils 2 verfüllt. Der Klebstoff 10 ist ein besonders fester Klebstoff, der eine hohe Haftfähigkeit sowohl an Metall als auch an keramischen Werkstoffen hat und unter Bildung einer ersten Klebstoffverbindung 14 eine feste Fixierung des keramischen Bauteils in der Bohrung 8 gewährleistet.

Für diese Zwecke geeignete Klebstoffe 10 müssen folgende Eigenschaften besitzen: Sie müssen sehr gute elektrische Isolatoren sein, mit möglichst günstigen dielektrischen Eigenschaften im gesamten Temperaturbereich. Außerdem müssen die Kleber im Temperaturbereich von Raumtemperatur bis ca. 200°C einsetzbar sein. Beispielhafte Kleber sind z. B. EP21AOHT, EP21CHT-1, EP21TDCHT-1,EP34CA, EP35, EP39MHT, EP42HT, EP121CL (Fa. Master-Bond); 7030, 903HP, 989, Durapot 801, Resbond S5H13, Duralco 4460, Duralco 4525, Duralco 4525 EHV, Duralco 4535 Fa. Cotronics); EP 5430 (Fa. Rhenatech); DER 354 (Fa. Dow Corning)

Der Bereich der mit dem Klebstoff 10 gefüllten Bohrung 8 und die äußere Deckseite 15 der Zwischenplatte 5 ist von einer Schicht aus einem zweiten Klebstoff 16 bedeckt. Die erste Klebstoffverbindung 14 ist damit gegenüber der äußeren Umgebung abgeschirmt und geschützt. Diese äußere Umgebung kann beispielsweise von einem zu prüfenden, zu messenden oder zu überwachenden Medium 20 gebildet sein.

Der Klebstoff 16 der so gebildeten zweiten Klebstoffverbindung 22 hat gegenüber dem Klebstoff 10 der ersten Klebstoffverbindung 14 eine wesentlich höhere Elastizität und kann dadurch mechanische und/oder temperaturinduzierte Belastungen wesentlich besser kompensieren. Insbesondere mechanische Spannungen infolge des unterschiedlichen Temperaturausdehnungsverhaltens der unterschiedlichen Bauteilwerkstoffe können durch den Klebstoff 16 besser aufgenommen bzw. kompensiert werden.

Für diese Zwecke geeignete Klebstoffe 16 sind z. B. RTV 102, 103, 106, 108, 109, 112, 116, 118, 159, 19.01, IS 800, 802, 803, 806, 808, SCS 1001 - 1003, 1009. 1097, 1297 (Fa. General Electric); Loctite Superflex (Fa. Loctite; VT 3601 E, VU 4691, VU4694 E, VU 4670 (Fa. Peters); Scrintec 901 (Fa. Roth); 5366, 5367, 5368, 5375, 5398, 5399 (Fa. Loctite)

Die äußere Seite 23 der zweiten Klebstoffverbindung 22 bildet also die einzige Klebstoff-Kontaktfläche 24 zum Medium 20 und gleicht durch ihre elastischen Eigenschaften thermische bedingte Spannungen gut aus, so dass eine hohe Dichtigkeit der gesamten Verbindung sichergestellt ist. Die in Richtung des Temperaturgradienten gesehen hinter der zweiten Klebstoffverbindung 22 befindliche erste Klebstoffverbindung 14 liegt vorteilhafterweise von der Kontaktfläche 24 und damit vom unmittelbaren Temperatureinfluss entfernt. Eine Rissbildung wie bei spröden, harten Klebstoffen ist damit nicht zu befürchten. Außerdem kann die Klebstoffverbindung 16 bestens auf die z.B. aggressiven Eigenschaften des Mediums 20 abgestimmt sein und so seine Schutzfunktion gegenüber der ersten Klebstoffverbindung besonders gut erfüllen.

Durch die beschriebene Kombination zweier getrennt optimierbarer Klebstoffverbindungen ist eine zuverlässige, dauerhaft dichte sowie herstellungstechnisch einfache und preiswerte Verbindung zwischen einem keramischen und einem metallischen Bauteil geschaffen.

Figur 2 zeigt als Verwendungsbeispiel ein Messgerät mit einer Gerätebaugruppe 30 und einer Sensorbaugruppe 31, in der die erfindungsgemäße Verbindung Verwendung findet. Die Sensorbaugruppe 31 umfasst eine Fühlerplatine und den eigentlichen Sensor 32, der vom einem Schutzbügel 34 umgeben ist. Der Sensor umfasst ein keramisches (Fühler-)element, das eine flüssigkeitsdichte und temperaturstabile Durchführung aus dem oberen Sensorbaugruppenrohr 36 erfordert.

Die in Figur 3 in Explosionsdarstellung vor der Montage gezeigte Sensorbaugruppe 31 umfasst den eigentlichen Sensor 40, der mittels eines harten Klebstoffs unter Bildung der ersten Klebstoffverbindung (vgl. Figur 1) in eine Bohrung einer Hülse 42 (Sensoraufnahme) eingeklebt wird. Danach wird der Sensor (z.B. zusammen mit einem NTC-Widerstand zur Temperaturmessung) mit einem zweiten Klebstoff hoher Elastizität unter Bildung der zweiten Klebstoffverbindung in die Sensoraufnahme - wie in Zusammenhang mit Figur 1 prinzipiell beschrieben - eingeklebt. Dann wird die soweit vorbereitete Baugruppe mit einer Fühlerplatine 43 verbunden bzw. verlötet, die elektrische Schaltungselemente trägt. Diese Anordnung wird schließlich in ein Schutzrohr 44 eingeführt und die Sensoraufnahme 42 mit diesem Rohr 44 verschweißt.

Einen Teil des so fertiggestellten Geräts zeigt in starker Vergrößerung Figur 4 im teilweisen Längsschnitt. Hier ist die erfindungsgemäße Verbindung 50 in Verwendung bei dem Messgerät gut sichtbar. Die Verbindung besteht wie beschrieben aus einer ersten Klebstoffverbindung 52 zwischen dem keramischen Bauteil (Sensor) 40 und einem metallischen Bauteil (Hülse) 42 und einer zweiten Klebstoffverbindung 54, die die erste Klebstoffverbindung 52 überdeckt und somit gegen äußere Einflüsse und den Folgen schneller Temperaturwechsel ("Temperaturschocks") schützt. In Figur 4 erkennbar ist außerdem der erwähnte NTC-Widerstand 56 und eine Schweißverbindung 58 zwischen dem Schutzrohr 44 und der Hülse (Sensoraufnahme) 42.

### Bezugszeichenliste:

- 1: metallisches Bauteil
- 2: keramisches Bauteil
- 3: Durchgangsbohrung
- 5: Zwischenplatte
- 8: Durchgangsbohrung
- 10: Klebstoff
- 12: Abschnitt
- 14: Klebstoffverbindung
- 15: äußere Deckseite
- 16: Klebstoff
- 20: Medium
- 22: Klebstoffverbindung
- 23: äußere Seite
- 24: Kontaktfläche

- 30: Gerätebaugruppe
- 31: Sensorbaugruppe
- 32: Sensor
- 34: Schutzbügel
- 36: Sensorbaugruppenrohr

- 40: Sensor
- 42: Hülse (Sensoraufnahme)
- 43: Fühlerplatine
- 44: Schutzrohr

- 50: Verbindung
- 52: Klebstoffverbindung
- 54: Klebstoffverbindung
- 56: NTC-Widerstand
- 58: Schweißverbindung 58

## Patentansprüche

1. Temperaturstabile und flüssigkeitsdichte Verbindung eines ersten Bauteils (1) aus Metall mit einem zweiten Bauteil (2) aus Keramik, die dem Temperatureinfluss eines äußeren Mediums (20) aussetzbar ist, umfassend:
- eine erste Klebeverbindung (14) zwischen dem zweiten (2) und dem ersten (1) Bauteil und
- eine zweite Klebstoffverbindung (22), deren Klebstoff (16) eine höhere Elastizität als der Klebstoff (10) der ersten Klebstoffverbindung (14) aufweist, und die so angeordnet ist, dass ein unmittelbarer Kontakt der ersten Klebstoffverbindung (14) mit dem äußeren Medium (20) verhindert ist, wobei
- das erste Bauteil (1) eine Aufnahmehülse mit einer Durchgangsbohrung (3) und einer darin querverlaufenden Zwischenplatte (5) mit einer zentralen Durchgangsöffnung (8) zum Durchtritt des zweiten Bauteils (2) ist und
- das zweite Bauteil (2) durch die erste Klebstoffverbindung (14) in der Durchgangsöffnung (8) fixiert ist.

2. Verbindung nach Anspruch 1, wobei die zweite Klebstoffverbindung (22) eine zum Kontakt mit dem äußeren Medium (20) vorgesehene äußere Kontaktseite (23) aufweist und eine der Kontaktseite abgewandten innere Seite aufweist, die der ersten Klebstoffverbindung (14) abschirmend zugewandt ist.

3. Verbindung nach Anspruch 2, wobei zumindest ein Bereich der inneren Seite der zweiten Klebstoffverbindung (22) in direktem Kontakt mit der ersten Klebstoffverbindung (14) ist.

4. Verwendung einer Verbindung nach einem der vorangehenden Ansprüche in einer Sensorbaugruppe (31) eines Messgeräts, die in ein zu untersuchendes Medium einbringbar ist.

## Claims

1. Temperature-stable and liquid-tight joint between a first component (1) made of metal and a second component (2) made of ceramic which can be exposed to the temperature effect of an external medium (20), comprising:
- a first adhesive bond (14) between the second component (2) and the first component (1), and
a second adhesive bond (22), of which the adhesive (16) has a greater elasticity than the adhesive (10) of the first adhesive bond (14), and which is arranged in such a way that direct contact of the first adhesive bond (14) with the external medium (20) is prevented, wherein
- the first component (1) is a receiving sleeve with a through-bore (3) and an intermediate plate (5) which extends transversely therein and has a central throughopening (8) to allow the passage of the second component (2), and
- the second component (2) is fixed in the through-opening (8) by means of the first adhesive bond (14).

2. Joint as claimed in claim 1, wherein the second adhesive bond (22) has an external contact side (23), which is provided for contact with the external medium (20), and an inner side which faces away from the contact side but faces towards the first adhesive bond (14) in a shielding manner.

3. Joint as claimed in claim 2, wherein at least one region of the inner side of the second adhesive bond (22) is in direct contact with the first adhesive bond (14).

4. Use of a joint as claimed in any one of the preceding claims in a sensor assembly (31) of a measuring device which can be inserted into a medium to be tested.

## Revendications

1. Liaison stable à la température et étanche aux liquides d'un premier composant (1) en métal avec un deuxième composant (2) en céramique, qui peut être exposée à l'influence de la température d'un milieu extérieur (20), comprenant :
- une première liaison collée (14) entre le deuxième (2) et le premier (1) composant et
- une deuxième liaison collée (22), dont la colle (16) présente une élasticité plus élevée que la colle (10) de la première liaison collée (14), et qui est disposée de telle manière qu'un contact direct de la première liaison collée (14) avec le milieu extérieur (20) soit empêché, dans laquelle
- le premier composant (1) est une douille de logement avec un trou de passage (3) et une plaque intermédiaire (5) s'étendant transversalement dans celui-ci avec une ouverture de passage centrale (8) pour le passage du deuxième composant (2) et
- le deuxième composant (2) est fixé dans l'ouverture de passage (8) par la première liaison collée (14).

2. Liaison selon la revendication 1, dans laquelle la deuxième liaison collée (22) présente un côté de contact extérieur (23) prévu pour le contact avec le milieu extérieur (20) et présente un côté intérieur à l'opposé du côté de contact, qui est tourné en formant écran vers la première liaison collée (14).

3. Liaison selon la revendication 2, dans laquelle au moins une région du côté intérieur de la deuxième liaison collée (22) est en contact direct avec la première liaison collée (14).

4. Utilisation d'une liaison selon l'une quelconque des revendications précédentes dans un module de capteur (31) d'un appareil de mesure, qui peut être introduit dans un milieu à étudier.
